(19) Europäisches Patentamt
European Patent Office
Office européen des brevets

(11) Veröffentlichungsnummer: **0 153 500**
**A2**

(12) # EUROPÄISCHE PATENTANMELDUNG

(21) Anmeldenummer: **84116412.2**

(22) Anmeldetag: **27.12.84**

(51) Int. Cl.⁴: **C 04 B 41/49**
C 09 D 3/82, C 08 L 95/00
C 08 L 83/04

(30) Priorität: **21.02.84 DE 3406266**

(43) Veröffentlichungstag der Anmeldung:
**04.09.85 Patentblatt 85/36**

(84) Benannte Vertragsstaaten:
**AT BE CH DE FR GB IT LI NL SE**

(71) Anmelder: **WACKER-CHEMIE GMBH**
**Prinzregentenstrasse 22**
**D-8000 München 22(DE)**

(72) Erfinder: **Wegehaupt, Karl-Heinrich, Dr.**
**Marktlerstrasse 78**
**D-8263 Burghausen(DE)**

(72) Erfinder: **Pusch, Rudolf**
**Marktlerstrasse 70**
**D-8263 Burghausen(DE)**

(72) Erfinder: **Pfeffer, Hans-Rudolf**
**Fischerweg 29**
**D-8261 Emmerting(DE)**

(54) **Verfahren zur Herstellung von Schutzüberzügen auf Beschichtungen aus Asphaltbeton und überzogene Beschichtungen.**

(57) Beschichtungen aus Asphaltbeton, insbesondere bei Wasserbauwerken, werden gegen unerwünschte Oberflächenveranderungen dadurch geschützt, daß auf die zu schützende Beschichtung aus Asphaltbeton ein Überzug aus zu einem Elastomer vernetzbarer Masse auf Grundlage von Diorganopolysiloxan aufgetragen und vernetzen gelassen wird, das stäbchenförmiges Mischpolymerisat aus Styrol und n-Butylacrylat enthält, das durch Mischpolymerisation der genannten Monomeren mittels freier Radikale in Gegenwart des Diorganopolysiloxans erzeugt wurde, wobei der Asphaltbeton vor dem Auftragen dieses Überzugs mit einem Überzug zur Verbesserung der Haftung des Elastomeren mit stäbchenförmigen Mischpolymerisat auf der Unterlage beschichtet sein kann. Gegenstand der Erfindung sind weiterhin überzogene Beschichtungen aus Asphaltbeton, die wie vorstehend beschrieben, hergestellt worden sind.

EP 0 153 500 A2

WACKER-CHEMIE
GMBH

München, den 26.1.1984
Dr.Ru/rei

0153500

Wa 8324-S

# Verfahren zur Herstellung von Schutzüberzügen auf Beschichtungen aus Asphaltbeton und überzogene Beschichtungen

Aus DE-OS 31 44 011 (offengelegt 19. Mai 1983, Wacker-Chemie GmbH) ist es bekannt, Bewuchs auf Betonoberflächen, die sich so lange unter Lebewesen enthaltendem Wasser befinden, daß sich auf diesen Oberflächen Bewuchs bilden kann, dadurch zu verhindern, daß auf die vor Bewuchs zu schützende Oberfläche ein Überzug aus einer zu einem Elastomer vernetzbaren Masse auf Grundlage von Diorganopolysiloxan, das stäbchenförmiges Mischpolymerisat aus Styrol und n-Butylacrylat enthält, das durch Mischpolymerisation der genannten Monomeren mittels freier Radikale in Gegenwart des Diorganopolysiloxans erzeugt wurde, aufgetragen und vernetzen gelassen wird.

Beton ist ein widerstandsfähiger Baustoff, der jedoch häufig Dehnungsfugen aufweisen muß. Um die Gefahren, die von diesen Dehnungsfugen ausgehen können, zu vermindern, wird beim Wasserbau der Beton vielfach mit Beschichtungen aus Asphaltbeton überzogen.

Es bestand nun die Aufgabe, Beschichtungen aus Asphaltbeton gegenüber durch Auslaugen, Temperatureinflüsse, Lebewesen, Eisbildung und/oder Abrieb bewirkte Oberflächenveränderungen durch lange Zeit beständige Überzüge zu schützen. Diese Aufgabe wird durch die Erfindung gelöst.

Gegenstand der Erfindung ist ein Verfahren zur Herstellung von Schutzüberzügen auf Beschichtungen aus Asphaltbeton, dadurch gekennzeichnet, daß auf die zu schützende Beschichtung aus Asphaltbeton ein Überzug aus zu einem Elastomer vernetzbarer Masse auf Grundlage von Diorganopolysiloxan aufgetragen und vernetzen gelassen wird, das stäbchenförmiges Mischpolymerisat aus Styrol und n-Butylacrylat enthält, das durch Mischpolymerisation der genannten Monomeren mittels freier Radikale in Gegenwart des Diorganopolysiloxans erzeugt wurde, wobei der Asphaltbeton vor dem Auftragen dieses Überzugs mit einem Überzug zur Verbesserung der Haftung des Elastomeren mit stäbchenförmigem Mischpolymerisat auf der Unterlage beschichtet sein kann.

Gegenstand der Erfindung sind weiterhin Beschichtungen aus Asphaltbeton, die, gegebenenfalls über einem Überzug zur Verbesserung der Haftung des weiteren Überzugs, einen Überzug aus einer zu einem Elastomer vernetzten Masse auf Grundlage von Diorganopolysiloxan, das stäbchenförmiges Mischpolymerisat aus Styrol und n-Butylacrylat enthält, das durch Mischpolymerisation der genannten Monomeren mittels freier Radikale in Gegenwart des Diorganopolysiloxans erzeugt wurde, aufweisen.

Vorzugsweise handelt es sich bei den zu schützenden Beschichtungen aus Asphaltbeton um solche aus Asphaltfeinbeton als dichtender Oberlage auf Asphaltgrobbeton als Unterlage insbesondere bei Wasserbauwerken, wie Pumpspeicherbecken oder wasserführenden Kanälen. Die Zusammensetzungen von Asphaltfeinbeton und Asphaltgrobbeton sind z.B. in "Lueger Lexikon der Technik / rororo Techniklexikon, Band 17, Reinbek bei Hamburg 1972, Seite 76/77, beschrieben.

Die Herstellung von zu Elastomeren vernetzbaren Massen auf Grundlage von Diorganopolysiloxan, das stäbchenförmiges Mischpolymerisat aus Styrol und n-Butylacrylat enthält, das durch Mischpolymerisation der genannten Monomeren, also Styrol und n-Butylacrylat, mittels freier Radikale in Gegenwart des Diorganopolysiloxans erzeugt wurde, ist bereits vielfach beschrieben worden und muß daher hier nicht näher erläutert werden.

Diese Herstellung ist z.B. in US 3 555 109 (veröffentlicht 12. Januar 1971, I.C. Getson, Stauffer-Wacker-Silicone Corporation), Beispiel 6 bis 8, US 3 776 875 (veröffentlicht 4. Dezember 1973, I.C. Getson, Stauffer Chemical Company) Beispiel 1 bis 4 sowie Beispiel 6, 8 und 9, sowie US 4 032 499 (veröffentlicht 28. Juni 1977, F.-H. Kreuzer et al., Consortium für elektrochemische Industrie GmbH), Beispiel 6, eingehend beschrieben. Derartige Massen sind im Handel erhältlich.

Vorzugsweise bestehen die stäbchenförmigen Mischpolymerisate, die in Gegenwart des Diorganopolysiloxans durch Mischpolymerisation mittels freier Radikale erzeugt wurden, zu 35 bis 70 Gewichtsprozent aus sich von Styrol ableitenden Einheiten und zum Rest aus sich von n-Butylacrylat ableitenden Einheiten.

Vorzugsweise beträgt die Menge vom Diorganopolysiloxan 20 bis 60 Gewichtsprozent, bezogen auf das Gesamtgewicht von Diorganopolysiloxan und Mischpolymerisat aus Styrol und n-Butylacrylat.

Insbesondere wegen der leichteren Zugänglichkeit sind vorzugsweise mindestens 80 % der Anzahl der organischen Reste der Diorganosiloxaneinheiten Methylreste.

Vorzugsweise haben die Diorganopolysiloxane, in deren Gegenwart stäbchenförmiges Mischpolymerisat aus Styrol und n-Butylacrylat erzeugt wird, vor dieser Mischpolymerisation eine durchschnittliche Viskosität von 150 bis 6000 mPa.s bei 25°C.

Bei den bei dem erfindungsgemäßen Verfahren und zur Herstellung der erfindungsgemäßen überzogenen Beschichtungen eingesetzten Massen kann es sich um sogenannte Einkomponentensysteme, also um Mischungen handeln, die in fertig gemischter Form in den Handel gebracht werden, oder um sogenannte Zweikomponentensysteme handeln, die aus mindestens zwei Komponenten mehr oder weniger unmittelbar vor dem Auftragen auf die zu

schützenden Oberflächen bereitet werden. Die Vernetzung der Massen erfolgt vorzugsweise durch Kondensation.

Zusätzlich zu vernetzbarem Diorganopolysiloxan und in Gegenwart von diesem Diorganopolysiloxan erzeugtem Mischpolymerisat aus Styrol und n-Butylacrylat sowie Vernetzungsmittel und gegebenenfalls Vernetzungskatalysator können die erfindungsgemäß eingesetzten, zu Elastomeren vernetzbaren Massen gegebenenfalls weitere Stoffe enthalten. Beispiele für solche weiteren Stoffe sind Füllstoffe, wie pyrogen erzeugtes Siliciumdioxyd, Lösungsmittel, wie Alkangemische mit einem Siedebereich von 80 bis 110°C bei 1013 mbar (abs.), Toluol, Pigmente, wie Aluminiumpulver, Weichmacher, wie durch Trimethylsiloxygruppen endblockierte Diorganopolysiloxane mit einer durchschnittlichen Viskosität von 50 bis 10 000 mPa.s bei 25°C, sowie Epoxidharze. Durch die Mitverwendung von Epoxidharzen wird die Filmbildung gefördert und beim Auftragen der zum Elastomer vernetzbaren Masse durch Sprühen leichter ein dicker Überzug erzielt. Enthalten die erfindungsgemäß verwendeten, zu Elastomeren vernetzbaren bzw. vernetzten Massen Epoxidharz, so vorzugsweise in Mengen von 3 bis 6 Gewichtsprozent, bezogen auf das Gesamtgewicht von Diorganopolysiloxan und in Gegenwart von diesem Diorganopolysiloxan erzeugtem Mischpolymerisat.

Vorzugsweise wird die Beschichtung aus Asphaltbeton vor dem Auftragen des Überzugs aus zu Elastomer vernetzbarer Masse auf Grundlage von Diorganopolysiloxan, das stäbchenförmiges Mischpolymerisat enthält, mit einem Überzug zur Verbesserung der Haftung des Elastomers mit den stäbchenförmigen Mischpolymerisaten auf der Unterlage grundiert. Es wurde gefunden, daß als eine derartige Grundierung eine solche aus Silan, das je Molekül mindestens eine über Kohlenstoff an Silicium gebundene Aminogruppe und mindestens einen über Sauerstoff an Silicium gebundenen, einwertigen, gegebenenfalls durch eine

Aminogruppe- oder Alkoxygruppe substituierten Kohlenwasserstoffrest enthält, und/oder Teilhydrolysat von solchem Silan ausgezeichnet geeignet ist. Beispiele für derartige Silane sind solche der Formeln

$CH_3Si(OCH_2CH_2NH_2)_2(CH_2)_3O(CH_2)_2NH_2$

$(CH_3O)_3Si(CH_2)_3NH(CH_2)_2NH_2$

$H_2N(CH_2)_2O(CH_2)_3Si(OCH_2CH_2NH_2)_3$

$H_2N(CH_2)_2O(CH_2)_3Si(OC_2H_5)_3$

sowie die Verbindungen mit den Bezeichnungen

N-beta-Aminoethyl-gamma-aminopropyltriethoxysilan

beta-Aminoethyltriethoxysilan

N-beta-Aminoethyl-delta-aminobutyltriethoxysilan

gamma-Aminopropyltriethoxysilan

Aminomethyltrimethoxysilan

N-beta-Aminoethyl-gamma-aminopropyltris-(methoxyethylenoxy)-silan und

delta-Aminobutyltriethoxysilan.

Verbindungen der Formel

$H_2N(CH_2)_2NH(CH_2)_3Si(OR)_3$

wobei R ein Alkylrest mit 1 bis 5 Kohlenstoffatomen je Rest oder ein Methoxyethylenrest ist, sind am meisten bevorzugt.

Bei der Herstellung der Grundierung kann die mindestens eine Aminogruppe enthaltende Organosiliciumverbindung in Lösungsmittel gelöst sein. Beispiele für dabei einsetzbare Lösungsmittel sind Alkane mit Siedepunkten im Bereich von 120° bis 180°C bei 1013 mbar (abs.), aromatische Kohlenwasserstoffe, wie Toluol und Xylole, Ketone, wie Methylethylketon; Alkohole,

wie Ethanol und Isopropanol; sowie Chlorkohlenwasserstoffe, wie Trichlorethylen.

Das Auftragen der erfindungsgemäß verwendeten Massen auf die zu schützenden Oberflächen kann z.B. durch Streichen, Gießen, Sprühen oder Aufwalzen erfolgen.

Bei Sonnenbestrahlung und Lufttemperaturen über 25°C kann die Temperatur des überzogenen Asphaltbetons 10 bis 15°C niedriger sein als die Temperatur von nicht überzogenem Asphaltbeton unter den gleichen Bedingungen. Diese Tatsache verhindert ein Ablaufen des Asphaltbetons von senkrechten oder schrägen Flächen, was insbesondere in tropischen und subtropischen Gebieten von großer Bedeutung ist.

In den folgenden Beispielen beziehen sich alle Angaben von Teilen und Prozentsätzen auf das Gewicht, soweit nichts anderes angegeben ist.

Der Asphaltbeton, der in den folgenden Beispielen 1 und 2 erwähnt ist, ist jeweils Asphaltfeinbeton mit Bitumen B 65 auf Asphaltgrobbeton, der wiederum als Beschichtung auf Betonprismen mit den Abmessungen 40 x 40 x 5 cm vorliegt.

Beispiel 1

Auf die Oberfläche von zwei der vorstehend beschriebenen Körper, die mit Asphaltbeton beschichtet sind, wird eine Lösung aus

30 Teilen N-beta-Aminoethyl-gamma-aminopropyltriethoxysilan
30 Teilen Ethanol
20 Teilen Xylolisomerengemisch

aufgestrichen.
Nach dem Trocknen des Grundierüberzugs wird auf den grundierten Asphaltbeton eine zu einem Elastomeren vernetzbare Masse aufgesprüht, die wie folgt hergestellt wurde:

In einem Polymerisationsgefäß mit einem Innendurchmesser von 312 mm und einer Höhe von 600 mm, das mit einem mit 200 Umdrehungen je Minute betriebenen Ankerrührer mit einer Breite von 295 mm an der breitesten Stelle, Gaseinleitungsrohr und Rückflußkühler ausgestattet ist, wurde unter Stickstoff ein Gemisch aus 5,2 kg (50 Mol) Styrol, 4,2 kg (33 Mol) n-Butylacrylat, 4,04 kg in den endständigen Einheiten je eine Si-gebundene Hydroxylgruppe aufweisendes Dimethylpolysiloxan mit einer Viskosität von 430 mPa.s bei 25°C, 0,8 kg Wasser und 0,141 kg 1,1-Di-tert.-butylperoxy-3,3,5-trimethylcyclohexan mittels eines bei 100°C gehaltenen Wasserdampfmantels 7 Stunden erwärmt.

Zur Entfernung von nicht-umgesetzten Monomeren und von Wasser wurde zunächst bei 100°C bis 130°C Stickstoff durch das Reaktionsgemisch geblasen und dann das Reaktionsgemisch 3 Stunden bei 16 mbar (abs.) auf 130°C erwärmt.

Das so erhaltene Diorganopolysiloxan, das stäbchenförmiges Mischpolymerisat aus Styrol und n-Butylacrylat enthält, das durch Mischpolymerisation der genannten Monomeren mittels freier Radikale in Gegenwart des Diorganopolysiloxans erzeugt wurde, hat eine Viskosität von 45 000 mPa.s bei 25°C und eine Bruttozusammensetzung von 30 % Dimethylpolysiloxan, 31,5 % sich von n-Butylacrylat ableitenden Einheiten und 38,5 % sich von Styrol ableitenden Einheiten.

65 Teile dieses Diorganopolysiloxans wurden mit 35 Teilen Alkangemisch mit einem Siedebereich von 80 bis 110°C bei 1013 mbar (abs.) und 1 Teil pyrogen erzeugtem Siliciumdioxyd mit einer BET-Oberfläche von 200 $m^2/g$ und kurz vor dem Auftragen auf den grundierten Asphaltbeton mit 3 Teilen eines Gemisches aus
1 Teil der Verbindung der Formel

$Si[OSn(C_4H_9)_2OOCCH_3]_4$ und

3 Teilen Tetra-n-propylsilikat vermischt, wodurch die zum Elastomeren vernetzbare Masse erhalten wurde.

Beispiel 2

Die in Beispiel 1 beschriebene Arbeitsweise wird wiederholt mit der Abänderung, daß in die zum Elastomeren vernetzbare Masse zusätzlich 5 %, bezogen auf ihr Gewicht, einer 70 %-igen Lösung von Epoxidharz [ Epikote (Registriertes Warenzeichen) 1001 (FA. Shell) ] in Toluol eingemischt wurden.

Die gemäß den Beispielen 1 und 2 überzogenen Körper werden 1/2 Jahr vom 1. Mai bis 31. Oktober in einen süddeutschen Flußkanal auf eine mit Algen belegte Schrägwand gelegt. Sie bleiben dabei im wesentlichen frei von Algenbewuchs. Die Haftung des elastomeren Überzugs auf den Körpern ist bei allen 4 Körpern so fest, daß ein Abziehen ohne Verletzung des Überzugs oder der Asphaltbetonschicht nicht möglich ist.

Beispiel 3

Bei verschiedenen Waserkraft-Werkskanälen wird auf schräge Probeflächen aus Beton, die in einem Fall mit etwa 15 Jahre altem Asphaltbeton (Oberfläche des durch Auslaugung von Bindemittel rauh), im anderen Fall mit verhältnismäßig frischem Asphaltbeton (glatte Oberfläche) beschichtet sind, nach Säuberung von anhaftendem Schmutz mittels einer Bürste eine Lösung aus

30 Teilen N-beta-Aminoethyl-gamma-aminopropyltriethoxysilan
40 Teilen Ethanol
20 Teilen Xylolisomerengemisch

gesprüht.

Nachdem der Grundierüberzug 1 Stunde Trocknen gelassen wurde,

wird Epoxidharz enthaltende Masse gemäß Beispiel 2 unter Anwendung eines Airless-Sprühgerätes auf den grundierten Asphaltbeton in einer Dicke von 300 bis 500 mikrometer aufgesprüht. Der Überzug vernetzt innerhalb 4 Stunden zu einem Elastomer, das so fest mit der Unterlage verbunden ist, daß es ohne Verletzung des Elastomeren oder der Asphaltbetonschicht nicht abgezogen werden kann. Auch nach einem 1/2 Jahr Verweilzeit unter und über Wasser ist eine nachteilige Veränderung vom Elastomer oder vom Asphaltbeton nicht feststellbar.
Bei Temperaturmessungen während Sonnenbestrahlung im Hochsommer ergibt sich, daß die Oberflächentemperatur der behandelten Flächen etwa 15°C niedriger ist als die der angrenzenden unbehandelten Asphaltbetonflächen.

P a t e n t a n s p r ü c h e :

0153500

1. Verfahren zur Herstellung von Schutzüberzügen auf Beschichtungen aus Asphaltbeton, d a d u r c h g e k e n n z e i c h n e t, daß auf die zu schützende Beschichtung aus Asphaltbeton ein Überzug aus zu einem Elastomer vernetzbarer Masse auf Grundlage von Diorganopolysiloxan aufgetragen und vernetzen gelassen wird, das stäbchenförmiges Mischpolymerisat aus Styrol und n-Butylacrylat enthält, das durch Mischpolymerisation der genannten Monomeren mittels freier Radikale in Gegenwart des Diorganopolysiloxans erzeugt wurde, wobei der Asphaltbeton vor dem Auftragen dieses Überzugs mit einem Überzug zur Verbesserung der Haftung des Elastomeren mit stäbchenförmigem Mischpolymerisat auf der Unterlage beschichtet sein kann.

2. Beschichtungen aus Asphaltbeton, die, gegebenenfalls über einem Überzug zur Verbesserung der Haftung des weiteren Überzugs, einem Überzug aus einer zu einem Elastomer vernetzten Masse auf Grundlage von Diorganopolysiloxan, das stäbchenförmiges Mischpolymerisat aus Styrol und n-Butylacrylat enthält, das durch Mischpolymerisation der genannten Monomeren mittels freier Radikale in Gegenwart des Diorganopolysiloxans erzeugt wurde, aufweisen.

3. Verfahren nach Anspruch 1, d a d u r c h g e k e n n z e i c h n e t, daß die zu einem Elastomer vernetzbare Masse zusätzlich zu vernetzbarem Diorganopolysiloxan und in Gegenwart von diesem Diorganopolysiloxan erzeugtem Mischpolymerisat sowie Vernetzungsmittel und gegebenenfalls Vernetzungskatalysator Epoxidharz enthält.

4. Beschichtung nach Anspruch 2, d a d u r c h g e k e n n z e i c h n e t, daß der Überzug aus der zum Elastomer vernetzten Masse zusätzlich zu Diorganopolysiloxan und in Gegenwart von diesem Diorganopolysiloxan erzeugtem Mischpolymerisat als mindestens einen weiteren Stoff Epoxidharz enthält.

5. Verfahren nach Anspruch 1 oder 3 und Beschichtungen nach Anspruch 2 oder 4,
d a d u r c h g e k e n n z e i c h n e t,
daß der Überzug zur Verbesserung der Haftung des Elastomeren mit stäbchenförmigem Mischpolymerisat auf der Unterlage aus Silan, das je Molekül mindestens eine über Kohlenstoff an Silicium gebundene Aminogruppe und mindestens einen über Sauerstoff an Silicium gebundenen, einwertigen, gegebenenfalls durch eine Aminogruppe oder Alkoxygruppe substituierten Kohlenwasserstoffrest enthält, und/oder Teilhydrolysat von solchem Silan erzeugt worden ist.

6. Verfahren nach Anspruch 5 oder Beschichtung nach Anspruch 5,
d a d u r c h g e k e n n z e i c h n e t,
daß das Silan solches der Formel

$$H_2N(CH_2)_3NH(CH_2)_3Si(OR)_3$$

ist, wobei R ein Alkylrest mit 1 bis 5 Kohlenstoffatomen je Rest oder ein Methoxyethylenrest ist.